# EUROPÄISCHE PATENTSCHRIFT

(11) **EP 0 557 671 B1**
(45) Veröffentlichungstag und Bekanntmachung des Hinweises auf die Patenterteilung: **27.09.1995**
(21) Anmeldenummer: 92810142.7
(22) Anmeldetag: 27.02.1992
(51) Int. Cl.: G01F 1/32

(54) **Wirbelströmungsmessgerät**
Vortex flow meter
Débimètre à tourbillons

(43) Veröffentlichungstag der Anmeldung: 01.09.1993
(73) Patentinhaber: Endress + Hauser Flowtec AG, CH-4153 Reinach BL 1 (CH)
(72) Erfinder: Lang, Michael, Dr. Ing., W-7858 Weil a. Rh. (DE); Schulz, Karl-Heinz, Dipl.-Ing., W-7858 Weil a. Rh. (DE)
(74) Vertreter: Morstadt, Volker, Dipl.-Ing. c/o Endress + Hauser Flowtec AG

(56) Entgegenhaltungen:
- DE-A- 3 544 198
- GB-A- 2 144 222
- US-A- 3 796 095
- US-A- 4 005 604
- US-A- 4 161 878
- PATENT ABSTRACTS OF JAPAN vol. 9, no. 224 (P-387)(1947) 10. September 1985 & JP-A-60 082 812
- Handbook of Measurement Science, Volume 2, ed. P.H.Sydenham, John Wiley and Sons, Chichester, GB,1983, Seite 1113

## Beschreibung

Die Erfindung betrifft ein Wirbelströmungsmeßgerät zur Messung der Strömungsgeschwindigkeit bzw. des Volumendurchflusses eines in einer Rohrleitung und in einem darin eingesetzten Meßrohr fließenden Fluids.

In der US-A 47 16 770 ist ein solches Wirbelströmungsmeßgerät beschrieben. Im Strömungskanal des Meßrohres ist dabei ein Staukörper angeordnet, der zur Erzeugung Kármán'scher Wirbel ausgebildet ist und ein über Durchlässe mit dem Strömungskanal verbundenes Sackloch aufweist. In dieses ist ein Wirbelsensor mit einem auf die von den Wirbeln erzeugten Druckschwankungen ansprechenden kapazitiven Wandler eingesetzt, der einen von den Druckschwankungen auslenkbaren, einen gegenüber dem Fluid abgeschlossenen Hohlraum aufweisenden ersten Schwingkörper als Sensorhülse, die innerhalb des Hohlraums eine Kondensator-Elektrode trägt, und einen innerhalb des Hohlraums beweglich angeordneten, von den Druckschwankungen entkoppelten zweiten Schwingkörper umfaßt, der mindestens eine weitere Kondensator-Elektrode trägt. Mit dem/den Kondensator/Kondensatoren ist eine spezielle, nach dem Switched-Capacitor-Prinzip arbeitende Meßschaltung verbunden.

Obwohl sich das vorbeschriebene Wirbelströmungsmeßgerät in der Praxis tausendfach bewährt hat, erlaubt der kapazitive Sensor einerseits wegen der einseitigen Erdung seiner Kondensator-Elektrode/Elektroden nicht dessen an sich erwünschte Potentialfreiheit und andererseits nicht einen möglichst geringen Leistungsbedarf der Meßschaltung. Insbesondere die durch das Switched-Capacitor-Prinzip bedingten Umladungen und die dafür erforderliche Leistung sind in bestimmten Anforderungsfällen störend, z.B. wenn die Anforderungen der deutschen Norm DIN 19 230 (4-mA-bis-20-mA-Technik) erfüllt werden sollen.

Ferner hat sich in der Praxis gezeigt, daß die Herstellung des vorbeschriebenen kapazitiven Sensors recht kostenintensiv ist, da hochgenau mechanische Bearbeitungsschritte, z.T. unter Reinraumbedingungen, erforderlich sind. Auch ist er im Hochtemperaturbereich nicht immer einsetzbar.

Zur Lösung dieser Probleme ist es daher eine Aufgabe der Erfindung, auf ein mit der vorbeschriebenen Konstruktion weitgehend kompatibles anderes Sensorprinzip überzugehen.

Die Erfindung schlägt daher ein Wirbelströmungsmeßgerät nach dem Wortlaut von Anspruch 1 vor.

Die Erfindung greift zur Lösung der Aufgabe auf einen elektrodynamischen Sensor zurück, wie er in dem Buch von P.H. Sydenham "Handbook of Measurement Sciences", Vol. 2, Chichester 1983 dem Prinzip nach beschrieben ist, nämlich einen Sensor mit einem von den Wirbeln bewegten Dauermagneten und einer - allerdings außerhalb des Meßrohrs angeordneten - Spule mit Eisenkern. Eine derartige Anordnung ist ferner in der JP-A 60-82 812 mit zugehörigem englischen Abstract beschrieben.

Auch gibt es im Stand der Technik weiter Vorschläge, die dem Prinzip nach bei Wirbelströmungsmeßgeräten schon früh beschrieben worden sind, nämlich magnetodynamische oder induktive Wandler als Sensoren der Wirbelfrequenz, vgl. z.B. die US-A 37 96 095 und die US-A 41 61 878. Die konstruktive Ausbildung dieser Wirbelströmungsmeßgeräte weicht jedoch von der Ausbildung der Erfindung sehr stark ab.

So ist bei der Anordnung nach der US-A 37 96 095 eine innerhalb eines von den wirbelbedingten Druckschwankungen im Staukörper hin- und herbewegten Gleitkörpers liegende ferromagnetische Scheibe vorgesehen, die das Feld eines Dauermagneten beeinflußt. Dadurch wird in einer auf den Dauermagneten gewickelten Spule eine Spannung induziert. Es handelt sich also bei dieser Anordnung nicht um einen elektrodynamisch, sondern lediglich um einen magnetodynamischen Sensor, bei dem Spule und Dauermagnet relativ zueinander nicht bewegt werden.

Bei der Anordnung nach der US-A 41 61 878 ist außerhalb des Staukörpers eine von den wirbelbedingten Druckschwankungen beaufschlagte ferromagnetische Membran vorgesehen, die mit einem nicht näher erläuterten magnetischen Sensor zusammenwirkt. Dabei soll eine Spannung entstehen. Das oben Gesagte trifft also auch hier zu, daß nämlich keine Relativbewegung zwischen einem Dauermagneten und einer möglicherweise vorhandenen Spule auftritt.

Die Erfindung hat u.a. den Vorteil, daß aufgrund der Abschirmhülse das Magnetfeld des Dauermagneten daran gehindert, zur Außenseite der Sensorhülse zu gelangen. Somit können sich dort etwa im Fluid mitgeführte ferromagnetische Teilchen nicht anlagern, und der dadurch möglichen Verstopfung der Durchlässe ist vorgebeugt.

Nach einer vorteilhaften Ausgestaltung der Erfindung ist die Spule als mindestens einlagige Spirale an bzw. an und in der Oberfläche eines Isolierstoffteils, insb. eines Keramik-Substrats, ausgebildet. Andererseits kann die Spirale aber auch aus mit Keramik beschichtetem Draht bestehen.

Nach einer anderen vorteilhaften Ausgestaltung der Erfindung sind der erste und der zweite Schwingkörper so dimensioniert, daß deren jeweilige mechanische Resonanzfrequenz größer als die höchste im Betrieb auftretende Wirbelfrequenz ist und daß bei Einwirkung von aus der Rohrleitung stammenden Druckstößen oder Druckschwingungen die Auslenkungen der beiden Schwingkörper nach Größe und Richtung möglichst gleich sind.

Die Erfindung wird nun anhand eines Ausführungsbeispiels unter Bezugnahme auf die Figuren der Zeichnung näher erläutert, in der gleiche Teile mit denselben Bezugszeichen versehen sind.
- Fig. 1: zeigt in teilweiser Schnittansicht den Aufriß eines Wirbelströmungsmeßgeräts, und
- Fig. 2: zeigt eine Schnittansicht des Wirbelsensor des Wirbelströmungsmeßgeräts von Fig. 1.

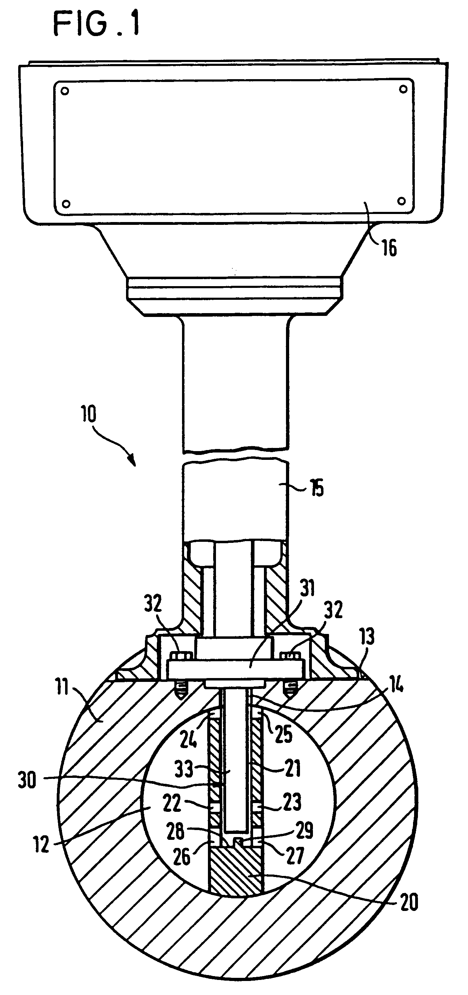

Das in Fig. 1 dargestellte Ausführungsbeispiel eines Wirbelströmungsmeßgeräts 10 hat ein im Querschnitt gezeigtes Meßrohr 11, das in eine nicht gezeichnete Ronrleitunmg eingefügt wird, durch die das zu messende Fluid (Flüssigkeiten, Gase, Dämpfe) strömt. Das Fluid ist also z.B. in Fig. 1 als senkrecht zur Zeichenebene durch den Strömungskanal 12 des Meßrohres 11 fließend zu denken.

An der in Fig. 1 oben liegenden Seite des Meßrohres 11 ist eine Abflachung 13 gebildet, von der eine radiale Bohrung 14 in das Innere des Meßrohres 11 führt. Auf der Abflachung 13 ist eine rohrförmige Gehäusestütze 15 befestigt, die am dem Meßrohr 11 gegenüberliegenden Ende ein Schaltunggehäuse 16 für eine Auswerteelektronik trägt.

Im Inneren des Meßrohres 11 ist ein Staukörper 20 angeordnet, der sich diametral über den ganzen Strömungskanal 12 erstreckt und an seinen beiden Enden fest mit der Wand des Meßrohres 11 verbunden, z.B. dort verschweißt, ist. Der Staukörper 20 ist so ausgebildet, daß er im strömenden Fluid eine sogenannte Kármán'sche Wirbelstraße erzeugt. Dazu ist er als prismatischer Körper mit gleichbleibendem Querschnitt ausgebildet, der z.B. die Form eines gleichschenkligen Dreiecks hat, dessen Grundlinie der Fließrichtung zugewandt ist.

Am Staukörper 20 entstehen bekanntlich zwei parallele Wirbelstraßen, wobei die Wirbel der einen gegenüber denen der anderen versetzt sind. Die Messung der Strömungsgeschwindigkeit beruht darauf, daß der Abstand zwischen aufeinanderfolgenden Wirbeln in jeder Wirbelstraße über einen großen Geschwindigkeitsbereich praktisch konstant ist. Somit ist aber die Folgefrequenz der Wirbel, also die Anzahl der Wirbel, die pro Zeiteinheit eine bestimmte, also örtlich fest gedachte, Querschnittsfläche durchwandern, nur von der Strömungsgeschwindigkeit abhängig und dieser direkt proportional.

Das Wirbelströmungsmeßgerät ist daher so ausgebildet, daß es zunächst ein die Folgefrequenz der Wirbel charakterisierendes Signal bildet, aus dem die Auswerteelektronik den Volumendurchfluß ableitet bzw. berechnet.

Zu diesem Zweck ist im Staukörper 20 ein Sackloch 21 ausgebildet, das sich in Fig. 1 von seinem oberen bis fast zu seinem unteren Ende erstreckt. Der Staukörper 20 ist so im Meßrohr 11 befestigt, daß das Sackloch 21 koaxial zu einer Bohrung 14 in der Wand des Meßrohres 11 liegt. Das Sackloch 21 ist vorzugsweise zylindrisch und hat denselben Innendurchmesser wie die Bohrung 14.

Das Sackloch 21 steht ferner mit dem Strömungskanal 12 des Meßrohres 11 über mehrere Durchlässe in Verbindung, die quer zur Strömungsrichtung durch den Staukörper geführt sind und einander gegenüberliegen.

Ein erstes Paar von Durchlässen 22, 23 liegt etwa auf der Höhe der Strömungskanalachse, also etwa auf halber Höhe des Staukörpers 20. Ein zweites Paar von Durchlässen 24, 25 liegt am oberen Ende des Staukörpers 20 unmittelbar an der Wand des Meßrohres 11. Ein drittes Paar von Durchlässen 26, 27 ist schließlich am unteren Ende des Sacklochs 21 auf der Höhe einer es begrenzenden Stirnwand 28 angeordnet. In der Mitte zwischen den beiden unteren Durchlässen 26, 27 ist an der Stirnwand 28 eine Trennwand 29 geringer Höhe ausgebildet, die parallel zur Achse des Meßrohres 11 verläuft.

Ein Wirbelsensor 30 ragt durch die Bohrung 14 in das Sackloch 21, wo er kurz vor der Trennwand 29 endet, und er wird von einem Flansch 31 getragen, der mit Schrauben 32 auf der Abflachung 13 befestigt ist.

Wie Fig. 1 zu entnehmen ist, ist der Außendurchmesser des Wirbelsensors 30 etwas kleiner als der Innendurchmesser des Sacklochs 21 im Staukörper 20, so daß der Wirbelsensor 30 allseits einen Abstand zur Sacklochwand einhält. Der dadurch gebildete freie Raum ist über die Durchlässe 22 ... 27 mit dem im Strömungskanal 12 fließenden Fluid gefüllt.

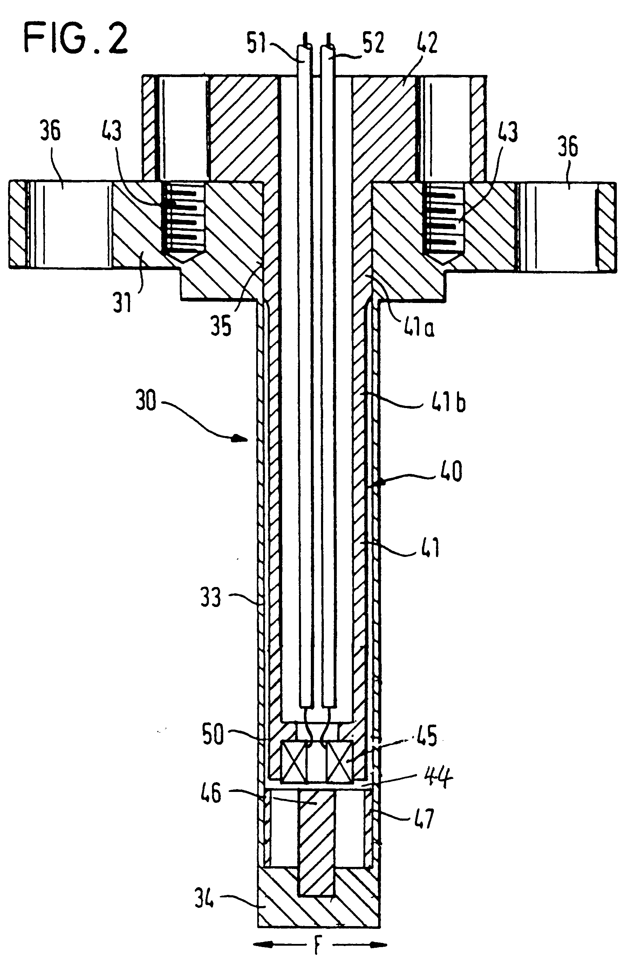

Der Aufbau des Wirbelsensors 30 und seine Einzelheiten sind in Fig. 2 gezeigt. Er umfaßt zwei Schwingkörper. Der erste Schwingkörper ist als rohrförmige Sensorhülse 33 mit einem Hohlraum 44 ausgebildet, die an ihrem einen Ende am Flansch 31 befestigt und an ihrem anderen Ende durch eine Stirnwand 34 dicht verschlossen ist. Der Flansch 31 hat eine Mittelöffnung 35, die koaxial zur Sensorhülse 33 liegt und deren Durchmesser gleich dem Innendurchmesser der Sensorhülse 33 ist. Der Flansch 31 hat ferner mehrere über dem Umfang verteilte Bohrungen 36 zur Aufnahme von Schrauben 32, mit denen er auf der Abflachung 13 (vgl. Fig. 1) befestigt wird. Die Sensorhülse 33 kann zusammen mit der Stirnwand 34 aus demselben Material, z.B. aus, insb. nichtrostendem, Stahl, bestehen bzw. geformt sein. Auf oder - wie in Fig. 2 gezeigt - in der Stirnwand 34 ist - im letzteren Falle darüber herausragend - ein Dauermagnet 46, vorzugsweise koaxial zur Sensorhülsenachse, angebracht.

Als Dauermagnet kann z.B. ein axial magnetisierter Zylinder (Länge z.B. 10 mm, Durchmesser z.B. 3 mm bis 5 mm) eines, vorzugsweise hochkoerzitiven, AlNiCo-Dauermagnetmaterials verwendet werden.

Ferner ist eine Abschirmhülse 47 vorgesehen, die aus ferromagnetischem Material mit einer relativen Permeabilität, die groß gegen eins ist, besteht und seitlich entlang der Innenwand der Sensorhülse 33 den Dauermagneten 46 möglichst vollständig umgibt. Dadurch wird dessen Magnetfeld daran gehindert, zur Außenseite der Sensorhülse 33 zu gelangen. Somit können sich dort etwa im Fluid mitgeführte ferromagnetische Teilchen nicht anlagern, und der dadurch möglichen Verstopfung der Durchlässe 22 ... 27 ist vorgebeugt.

Der zweite Schwingkörper 40 des Wirbelsensors 30 ragt in den Hohlraum 44 der Sensorhülse 33 hinein und ist somit von den auf diese einwirkenden Druckschwankungen entkoppelt. Der zweite Schwingkörper 40 ist durch die Mittelöffnung 35 des Flansches 31 eingesetzt und besteht aus einem Rohr 41, das mit einem weiteren Flansch 42 verbunden, vorzugsweise einstückig mit dem Flansch 42 hergestellt ist, und er besteht z.B. ebenfalls aus, insb. nichtrostendem, Stahl. Er ist ferner mittels Schrauben 43 auf der Oberseite des Flansches 31 befestigt und erstreckt sich bis in die, bevorzugt unmittelbare, Nähe des Dauermagneten 46, ohne diesen selbstverständlich zu berühren. Spule 45 und Dauermagnet 46 bilden somit einen elektrodynamischen Wandler.

Am dem Dauermagneten 46 gegenüberliegenden Ende des Rohres 41 ist eine Spule 45 angeordnet, die sich im Feld des Dauermagneten 46 befindet. Das Rohr 41 des somit auch als Spulenträger anzusehenden oder zu bezeichnenden zweiten Schwingkörpers 40 hat zwei Abschnitte von unterschiedlichem Durchmesser. Ein erster Abschnitt 41a, der in der Mittelöffnung 35 des Flansches 31 sitzt, hat einen Außendurchmesser, der gleich dem Durchmesser der Mittelöffnung 35 ist, wodurch ein fester Sitz und eine genau Positionierung des Spulenträgers erzielbar sind.

Ein zweiter Abschnitt 41b bildet den restlichen Teil des Rohres 41 und hat einen Außendurchmesser, der etwas kleiner als der Innendurchmesser der Sensorhülse 33 ist, so daß deren Umfang durch einen schmalen ringförmigen Spalt 50 vom Abschnitt 41b vollständig getrennt ist.

Von der Spule 45 führen Anschlußleitungen 51, 52 durch das hohle Innere des Rohres 40 und durch die rohrförmige Gehäusestütze 15 (vgl. Fig. 1) hindurch zu der im Schaltungsgehäuse 16 untergebrachten Auswerteelektronik.

Der beschriebene Aufbau des Wirbelströmungsmeßgeräts 10 ergibt die folgende Funktionsweise:
Jeder der beiden Bestandteile des Wirbelsensors 30 stellt einen langgestreckten Schwingkörper 33, 40 dar, der an einem Ende fest eingespannt sowie gehalten ist und dessen anderes, freies Ende durch die Einwirkung einer Kraft F aus der in Fig. 2 gezeigten Ruhestellung quer zu seiner Längsrichtung ausgelenkt werden kann, was durch den Doppelpfeil veranschaulicht ist.

Wenn durch das Meßrohr 11 ein Fluid strömt und sich die beiden Wirbelstraßen vom Staukörper 20 ablösen, entstehen zu dessen beiden Seiten periodische, gegenphasige Druckschwankungen, die über die Durchlässe 22, 23 in den Hohlraum 21 übertragen werden und auf die Sensorhülse 33 einwirken. Dadurch wird sie quer zu ihrer Längs- und quer zur Strömungsrichtung hin und her ausgelenkt. Da sie am einen Ende eingespannt ist, wird sie auf Biegung beansprucht, so daß sie unter den Druckschwankungen Biegeschwingungen ausführt, deren Frequenz gleich der der Druckschwankungen ist.

Die Biegeschwingungs-Eigenresonanzfrequenz der Sensorhülse 33 ist wesentlich höher als die höchste vorkommende Frequenz der Druckschwankungen. Somit werden die Biegeschwingungen der Sensorhülse 33 unterkritisch angeregt und folgen nach Frequenz und Phase genau den Druckschwankungen. Die Amplituden der Biegeschwingungen sind sehr klein, und der Wirbelsensor 30 ist so dimensioniert, daß die Sensorhülse 33 bei den größten im Betrieb vorkommenden Amplituden weder an der Wand des Hohlraums 21 noch am Spulenträger 40 anschlägt.

Die oberen Durchlässe 24, 25 und die unteren Durchlässe 26, 27 im Staukörper 20 ermöglichen eine freie Zirkulation des Fluids zwischen Hohlraum 21 und Strömungskanal 12, so daß das Fluid ungehindert den Schwingungen der Sensorhülse 33 ausweichen und folgen kann. Dabei verhindert die Trennwand 29 zwischen den unteren Durchlässen 26, 27 einen direkten Druckausgleich um das untere Ende der Sensorhülse 33 herum (vgl. Fig. 1).

Der im Inneren der dicht verschlossenen Sensorhülse 33 angeordnete Spulenträger 40 steht mit dem Fluid nicht in Kontakt und ist daher von dessen Druckschwankungen vollständig entkoppelt; er bleibt somit diesen gegenüber in Ruhe. Demzufolge bewegt sich das freie Ende der Sensorhülse 33 mit dem Dauermagneten 46 relativ zu dem feststehenden Ende des Spulenträgers 40 und der dort angebrachten Spule 45, so daß eine Spannung in der Spule induziert wird, deren Frequenz gleich der der Biegeschwingungen ist. Die Auswerteelektronik im Schaltungsgehäuse 16 verstärkt diese Spannung und bildet daraus eine für die Strömungsgeschwindigkeit und/oder den Volumendurchfluß repräsentative Signalgröße.

Wenn im Gegensatz zu den Druckschwankungen des Fluids äußere Kräfte über die Einspannstellen auf die beiden Schwingkörper einwirken, werden sie in gemeinsame Biegeschwingungen versetzt, so daß die freien Enden von Sensorhülse 33 und Spulenträger 40 gleichsinnig ausgelenkt werden. Solche Kräfte können z. B. durch Vibrationen entstehen, die das Meßrohr 11 und damit die Sensoreinspannstelle in eine translatorische Schwingung mit beliebiger Achsrichtung versetzen oder die beiden Schwingkörper um die Einspannstellen zu drehen suchen.

Durch geeignete Ausbildung und Bemessung der beiden Schwingkörper läßt sich erreichen, daß zwischen Dauermagnet 46 und Spule 45 praktisch keine Relativbewegung auftritt und somit von den äußeren Kräften keine Störspannung bewirkt wird. Wenn mit ihnen zusammen die wirbelbedingten Druckschwankungen auftreten, erfolgt daher nur die von den letzteren hervorgerufene Relativbewegung. Der Wirbelsensor ist daher unempfindlich gegen äußere Störeinflüsse und ermöglicht die sichere Detektion der Druckschwankungen auch unter gestörten Bedingungen.

## Patentansprüche

1. Wirbelströmungsmeßgerät (10) zur Messung der Strömungsgeschwindigkeit bzw. des Volumendurchflusses eines in einer Rohrleitung und in einem darin eingesetzten Meßrohr (11) fließenden Fluids
- mit einem in dessen Strömungskanal (12) angeordneten Staukörper (20), der
-- zur Erzeugung Kármán'scher Wirbel ausgebildet ist und ein über Durchlässe (22, 23, 24, 25, 26, 27) mit dem Strömungskanal (12) verbundenes Sackloch (21) aufweist,
- mit einem in das Sackloch eingesetzten Wirbelsensor (30) mit einem auf die von den Wirbeln erzeugten Druckschwankungen ansprechenden elektrodynamischen Wandler, der
-- einen von den Druckschwankungen auslenkbaren, einen gegenüber dem Fluid abgeschlossenen Hohlraum (44) aufweisenden ersten Schwingkörper als Sensorhülse (33),
--- die innerhalb des Hohlraums (44) einen Dauermagneten (46) trägt, und
-- einen innerhalb des Hohlraums (44) beweglich angeordneten, von den Druckschwankungen entkoppelten zweiten Schwingkörper (40) umfaßt, der
--- mindestens eine dem Dauermagneten (46) gegenüberliegende Spule (45) trägt, und
- mit einer den Dauermagneten (46) seitlich innerhalb der Sensorhülse (33) umgebenden Abschirmhülse (47) aus ferromagnetischem Material mit einer relativen Permeabilität, die groß gegen eins ist.

2. Wirbelströmungsmeßgerät nach Anspruch 1 mit einer Spule (45), die als mindestens einlagige Spirale an bzw. an und in der Oberfläche eines Isolierstoffteils, insb. eines Keramik-Substrats, gebildet ist.

3. Wirbelströmungsmeßgerät nach Anspruch 1 oder 2 mit einer solchen Dimensionierung des ersten und des zweiten Schwingkörpers (33, 40), daß deren jeweilige mechanische Resonanzfrequenz größer als die höchste im Betrieb auftretende Wirbelfrequenz ist und daß bei Einwirkung von aus der Rohrleitung (11) stammenden Druckstößen oder Druckschwingungen die Auslenkungen der beiden Schwingkörper nach Größe und Richtung möglichst gleich sind.

## Claims

1. A vortex flow meter (10) for measuring the flow velocity and/or the volumetric flow rate of a fluid flowing in a pipe and in a measuring tube (11) installed therein, comprising
- a bluff body (20) disposed in the conduit (12) of the measuring tube,
-- said bluff body (20) being designed to generate Kármán vortices and having a blind hole (21) which is in communication with the conduit (12) via passages (22, 23, 24, 25, 26, 27) formed in the bluff body (20),
- a vortex sensor (30) inserted into the blind hole and having an electrodynamic transducer responsive to the vortex-induced pressure fluctuations,
-- said electrodynamic transducer supporting a first oscillating body in the form of a sensor sleeve (33) which is deflectable by the pressure fluctuations, has a first cavity (44) sealed from the fluid, and
--- supports a permanent magnet (46) within the cavity (44), and
-- a second oscillating body (40) movably disposed within the cavity (44) so as to be isolated from the pressure fluctuations and
--- supporting at least one coil (45) located opposite the permanent magnet (46), and
- a shield sleeve (47) of ferromagnetic material surrounding the permanent magnet (46) laterally within the sensor sleeve (33) and having a relative permeability much greater than one.

2. A vortex flow meter as claimed in claim 1, comprising a coil (45) designed as an at least single-layer helix and disposed on or on and in the surface of an insulating part, particularly of a ceramic substrate.

3. A vortex flow meter as claimed in claim 1 or 2 wherein the first and second oscillating bodies (33, 40) are so dimensioned that their respective mechanical resonance frequencies are greater than the maximum vortex frequency occurring in operation, and that under the action of pressure surges or compressive oscillations from the pipe (11), the deflections of two oscillating bodies are, as far as possible, equal in magnitude and direction.

## Revendications

1. Appareil de mesure de courant tourbillonnaire (10) destiné à mesurer la vitesse d'écoulement respectivement le débit d'un fluide s'écoulant dans une conduite et dans un tube gradué (11) inséré à l'intérieur de cette conduite,
- comprenant un corps à pression dynamique (20) disposé dans son canal d'écoulement (12), ledit corps de pression
-- étant conçu pour produire des tourbillons de Karman et présentant un trou borgne (21) relié au canal d'écoulement (12) par l'intermédiaire de passages (22, 23, 24, 25, 26, 27),
- comprenant un détecteur de tourbillons (30) encastré dans le trou borgne et présentant un convertisseur électromagnétique sensible aux fluctuations de pression produites par les tourbillons, ledit convertisseur
-- étant constitué d'un premier corps oscillant pouvant être dévié par les fluctuations de pression et présentant un creux (44) isolé par rapport au fluide, ce premier corps oscillant servant de manchon de détecteur (33),
--- portant à l'intérieur du creux (44) un aimant permanent (46), et
-- étant constitué d'un second corps oscillant (40) disposé de manière mobile à l'intérieur du creux (44) et n'étant pas influencé par les fluctuations de pression, ce second corps oscillant
--- portant au moins une borne (45) opposée à l'aimant permanent (40), et
- comprenant une douille de protection (47) ferromagnétique entourant latéralement l'aimant permanent (46) à l'intérieur du manchon de détecteur (33) et présentant une perméabilité relative maximale.

2. Appareil de mesure de courant tourbillonnaire selon la revendication 1, composé d'une bobine (45) conçue comme une spirale à au moins une couche sur respectivement sur et dans la surface d'une pièce en matière isolante, en particulier en céramique.

3. Appareil de mesure de courant tourbillonnaire selon l'une ou l'autre des revendications 1 et 2, dont le premier et le second corps oscillants (33, 40) présentent des dimensions telles que leur fréquence de résonance mécanique respective est supérieure à la fréquence des tourbillons la plus élevée apparaissant lors du fonctionnement et que par l'influence des coups de pression ou des fluctuations de pression provenant de la conduite (11), les déviations des deux corps oscillants présentent des grandeurs et des directions les plus identiques possible.
